# EUROPÄISCHE PATENTSCHRIFT

(11) **EP 4 374 085 B1**
(45) Veröffentlichungstag und Bekanntmachung des Hinweises auf die Patenterteilung: **06.11.2024**
(21) Anmeldenummer: 23794059.8
(22) Anmeldetag: 24.10.2023
(51) Int. Cl.: F16D 55/226, F16D 65/56

(54) **ELEKTROMECHANISCHE BREMSVORRICHTUNG FÜR EIN KRAFTFAHRZEUG**
ELECTROMECHANICAL BRAKE DEVICE FOR A MOTOR VEHICLE
DISPOSITIF DE FREINAGE ÉLECTROMÉCANIQUE POUR VÉHICULE AUTOMOBILE

(30) Priorität: 08.12.2022 BE 202205999; 10.03.2023 BE 202305178
(43) Veröffentlichungstag der Anmeldung: 29.05.2024
(73) Patentinhaber: thyssenkrupp Presta AG, 9492 Eschen (LI); thyssenkrupp AG, 45143 Essen (DE)
(72) Erfinder: SZIMANDL, Barna, 9473 Gams (CH); PONGRATZ, Dennis, 6842 Koblach (AT); SLATINSKY, Jan, 9470 Buchs (CH)
(74) Vertreter: thyssenkrupp Intellectual Property GmbH
(86) Internationale Anmeldenummer: PCT/EP2023/079654
(87) Internationale Veröffentlichungsnummer: WO 2024/069019

(56) Entgegenhaltungen:
- WO-A1-2021/251709
- DE-A1- 10 014 993
- DE-A1- 19 711 851
- DE-T2- 3 872 257
- US-A- 3 747 711
- US-A- 3 900 084
- US-A1- 2013 327 606
- US-A1- 2021 301 889
- US-A1- 2023 140 201

## Beschreibung

### Stand der Technik

Die Erfindung betrifft eine elektromechanische Bremsvorrichtung für ein Kraftfahrzeug, umfassend eine Stellvorrichtung und ein damit verbundenes Bremsteil, das von der Stellvorrichtung entlang einer Achse verstellbar und mit einem Gegenbremsteil in Bremseingriff bringbar ist, wobei die Stellvorrichtung einen ersten Stelltrieb und einen seriell damit gekoppelten zweiten Stelltrieb aufweist, wobei der erste Stelltrieb ein drehend antreibbares erstes Antriebsrad aufweist, und der zweite Stelltrieb ein drehend antreibbares, zu dem ersten Antriebsrad koaxiales zweites Antriebsrad aufweist, wobei zwischen dem ersten Antriebsrad und dem zweiten Antriebsrad eine Reibkupplung angeordnet ist, die zwei Reibelemente mit koaxialen Reibflächen umfasst, die zur Erzeugung eines Kupplungseingriffs reibschlüssig miteinander verbindbar sind, wobei mindestens ein Reibelement einteilig mit dem ersten Antriebsrad oder dem zweiten Antriebsrad ausgebildet ist.

Eine derartige Bremsvorrichtung eines Kraftfahrzeugs ist als Reibungsbremse ausgebildet, bei dem ein am Fahrgestellt abgestütztes, relativ zur Drehung des zu bremsenden Rades feststehendes Bremsteil mittels einer Stellvorrichtung in Bremseingriff gebracht werden kann mit einem Gegenbremsteil, welches mit dem Rad rotiert. Im Bremseingriff wird ein Reibkontakt zwischen Bremsteil und Gegenbremsteil erzeugt, wobei das durch Reibung erzeugte Bremsmoment umso größer ist, je höher die von der Stellvorrichtung in der Verstellrichtung ausgeübte Verstellkraft ist.

Eine verbreitete Bauform sind die im Prinzip bekannten Scheibenbremsen, bei denen das Gegenbremsteil durch eine mit dem Rad rotierende Bremsscheibe gebildet wird, die von einem Bremssattel beidseitig axial umgriffen wird. Durch mindestens einen an dem Bremssattel axial abgestützten, bevorzugt linearen Stelltrieb kann ein Bremsteil, in der Regel ein Bremsbelag, in einer axialen Verstellrichtung verstellt und dadurch in Reibkontakt mit einer Axialseite der Bremsscheibe gebracht werden, wobei die Bremsscheibe zwischen dem verstellten Bremsteil und einem weiteren, axial gegenüberliegend an dem Bremssattel abgestützten Bremsteil im Bremseingriff reibschlüssig eingespannt wird.

Voraussetzung für eine einwandfreie Funktion und ein punktgenaues Ansprechen der Bremse ist, dass im unbetätigten Zustand zwischen dem Bremsteil und dem Gegenbremsteil in der Verstellrichtung ein definierter Abstand, der sogenannte Luftspalt bereitgestellt wird. Bei der Betätigung der Bremse wird das Bremsteil durch die Stellvorrichtung senkrecht zum Luftspalt auf das Gegenbremsteil zu bewegt, bis der Luftspalt überwunden und der Reibkontakt erreicht ist, so dass der Bremseingriff erzeugt ist.

Für ein reproduzierbares und punktgenaues Ansprechen der Bremse im Fahrbetrieb ist es maßgeblich, dass der Luftspalt im unbetätigten Zustand in der axialen Verstellrichtung gemessen eine definierte Spaltbreite hat. Die Spaltbreite kann sich im Laufe des Betriebs beispielsweise durch Abnutzung des Bremsbelags vergrößern, und muss entsprechend nachjustiert werden. Zur Justierung des Luftspalts ist es aus der DE 10 2017 123 266 A1 bekannt, dass die Stellvorrichtung zwei in Verstellrichtung seriell angeordnete Stelltriebe aufweist. Jeder der Stelltriebe weist ein antriebsseitiges Antriebselement und ein relativ dazu linear in der axialen Verstellrichtung verstellbares abtriebsseitiges Abtriebselement auf. Zur Realisierung einer Verstellbewegung weist jedes Antriebselement ein Antriebsrad auf, bevorzugt ein Getrieberad wie ein Zahnrad oder dergleichen, welches durch einen elektrischen Stellmotor um seine Achse drehend antreibbar ist. Die Drehung des Antriebsrads wird in dem Stelltrieb jeweils in eine relative Verstellbewegung bzw einen Stellhub des Abtriebselements relativ zum Antriebselement in der axialen Verstellrichtung umgesetzt. In dem gattungsgemäßen Stand der Technik sind die beiden Antriebsräder des ersten und zweiten Stelltriebs koaxial auf einer in der axialen Verstellrichtung liegenden gemeinsamen Achse angeordnet.

Ein Stelltrieb bildet jeweils eine in der Verstellrichtung axial wirksame Hub- oder Verstelleinrichtung. Beispielsweise kann ein Stelltrieb einen Spindeltrieb aufweisen, bei dem das Antriebselement eine Spindelmutter aufweist, und das Abtriebselement eine darin eingreifende Gewindespindel, oder umgekehrt. Es können auch andere Bauformen von Stelltrieben eingesetzt werden, die beispielsweise Rampenlager, Nocken- oder Kurvenscheiben, Kippstiftanordnungen oder dergleichen umfassen können, und ebenfalls eine Drehung des Antriebselements in eine lineare Verstellung des Abtriebselements umsetzen.

Dadurch, dass das Antriebselement des zweiten Stelltriebs mit dem Abtriebselement des ersten Stelltriebs gekoppelt ist, und das Bremselement am Abtriebselement des zweiten Stelltriebs angebracht ist, kann durch eine Betätigung des ersten Stelltriebs das Bremselement zusammen mit dem zweiten Stelltrieb linear verstellt werden, um den Bremseingriff zu erzeugen. Durch eine Verstellung des zweiten Stelltriebs unabhängig von der Betätigung des ersten Stelltriebs kann der Luftspalt justiert werden. Der erste Stelltrieb kann somit durchgehend im optimalen Arbeitsbereich betrieben werden.

Ein weiterer Vorteil der zwei gekoppelten Stelltriebe ist, dass eine redundante Auslegung möglich ist. So kann beispielsweise durch den im Normalbetrieb lediglich zur Justierung des Luftspalts eingesetzten zweite Stelltrieb grundsätzlich auch der Bremseingriff erzeugt werden.

Um eine im Normalbetrieb synchrone Rotation des ersten und zweiten Antriebselements zu ermöglichen, so dass der zweite Stelltrieb als Ganzes mitgeschleppt und nicht verstellt wird, ist in der genannten DE 10 2017 123 266 A1 vorgeschlagen worden, zwischen dem ersten und zweiten Antriebsrad eine Rastkupplung vorzusehen. Dadurch können die beiden Antriebsräder in separaten, lösbar formschlüssig einrastbaren Raststufen gekuppelt sein, so dass eine zuverlässige Drehmomentübertragung zur Synchronisation ermöglicht wird. Die vorgegebenen diskreten Raststufen müssen jedoch auch zur Einstellung des Luftspalts überwunden werden. Nachteilig daran ist, dass nur eine stufenweise Justierung des Luftspalts möglich ist, wodurch der Ausgleich der kontinuierlichen Abnutzung des Bremselements nicht befriedigend möglich ist. Außerdem ist zur Überwindung der Raststufen ein relativ hohes Antriebsmoment erforderlich.

Um die vorgenannten Nachteile der bekannten Kupplung zu überwinden, wird in der unveröffentlichten Anmeldung BE 2022/5999 vorgeschlagen, eine bezüglich des Kupplungseingriffskontinuierlich wirkende Reibkupplung zu realisieren. Diese weist an den beiden Antriebsrädern angebrachte Reibelemente mit koaxialen, einander gegenüberliegenden Reibflächen auf, die zur Erzeugung eines Kupplungseingriffs in Reibkontakt gebracht werden können. Die Reibelemente sind separat ausgebildet und drehschlüssig mit den Antriebsrädern gekuppelt. Dadurch ist der Fertigungs- und Montageaufwand und sowie der Bauraumbedarf und das Gewicht relativ hoch.

Eine Bremsvorrichtung der eingangs genannten Art ist aus der US 2021/301889 A1 bekannt. Sie offenbart eine elektromechanische Bremsvorrichtung aufweisend zwei seriellen Stelltriebe.

Angesichts der vorangehend erläuterten Problematik ist es Aufgabe der vorliegenden Erfindung, einen reduzierten Fertigungs- und Montageaufwand bei geringerem Bauraumbedarf und Gewicht zu ermöglichen.

### Darstellung der Erfindung

Diese Aufgabe wird erfindungsgemäß gelöst durch die Bremsvorrichtung mit den Merkmalen des Anspruchs 1.Vorteilhafte Weiterbildungen ergeben sich aus den Unteransprüchen.

Bei eine elektromechanischen Bremsvorrichtung für ein Kraftfahrzeug, umfassend eine Stellvorrichtung und ein damit verbundenes Bremsteil, das von der Stellvorrichtung entlang einer Achse verstellbar und mit einem Gegenbremsteil in Bremseingriff bringbar ist, wobei die Stellvorrichtung einen ersten Stelltrieb und einen seriell damit gekoppelten zweiten Stelltrieb aufweist, wobei der erste Stelltrieb ein drehend antreibbares erstes Antriebsrad aufweist, und der zweite Stelltrieb ein drehend antreibbares, zu dem ersten Antriebsrad koaxiales zweites Antriebsrad aufweist, wobei zwischen dem ersten Antriebsrad und dem zweiten Antriebsrad eine Reibkupplung angeordnet ist, die zwei Reibelemente mit koaxialen Reibflächen umfasst, die zur Erzeugung eines Kupplungseingriffs reibschlüssig miteinander verbindbar sind, wobei mindestens ein Reibelement einteilig mit dem ersten Antriebsrad oder dem zweiten Antriebsrad ausgebildet ist, ist erfindungsgemäß vorgesehen, dass die Reibelemente gegeneinander vorgespannt sind.

Im Folgenden werden das erste und das zweite Antriebsrad zusammen auch als die beiden Antriebsräder oder kurz als die Antriebsräder bezeichnet. Dabei weist das eine Antriebsrad ein Reibelement und das andere Antriebsrad ein damit zusammenwirkendes, korrespondierendes Reibelement auf, welches auch als Gegenreibelement bezeichnet werden kann. Entsprechend das Reibelement und das Gegenreibelement im Folgenden auch zusammen als die Reibelemente bezeichnet. Das Reibelement ist dabei definitionsgemäß der Teil der Reibkupplung, der die Reibfläche aufweist.

Die Antriebsräder können jeweils als Zahnrad, beispielsweise als Stirnrad, oder aus als Riemen- oder Zahnriemenrad oder Schneckenrad ausgebildet sein, so dass generell ein Getrieberad zur Verfügung gestellt wird, über das ein Antriebsmoment von einem elektrischen Stellmotor in den Stelltrieb eingekoppelt werden kann.

Erfindungsgemäß ist vorgesehen, dass die Reibelemente gegeneinander vorgespannt sind. Bevorzugt sind die Reibelemente im Kupplungseingriff elastisch bzw. federnd gegeneinander vorgespannt. Dabei werden die Reibflächen mit einer vorgegebenen axialen Vorspannkraft im Reibschluss gegeneinander angepresst. Die Vorspannkraft wird gleichbedeutend als Betätigungskraft der Kupplung bezeichnet. Zur Erzeugung der Vorspannkraft kann bevorzugt ein elastisches Vorspannelement vorgesehen sein, beispielsweise ein Federelement oder dergleichen. Das Kupplungsmoment der Reibkupplung wird durch die senkrecht zum Reibkontakt wirkende Betätigungskraft bestimmt, also die axial zwischen den Reibelementen aufgebrachte Kraft, wobei das Kupplungsmoment umso größer ist, je größer die Vorspannkraft (Betätigungskraft) ist. Dies eröffnet die vorteilhafte Möglichkeit, das Kupplungsmoment einfach durch die durch das Vorspannelement ausgeübte Vorspannkraft vorzugeben. Beispielsweise kann bei einem in axialer Richtung druckelastischen Federelement, wie einer Druckfeder, die ausgeübte Vorspannkraft einfach durch der Federkonstante und die Kompression der Feder vorgegeben und angepasst werden.

Das Reibelement ist baulich mit dem Antriebrad integriert ausgebildet. Bevorzugt können beide Antriebsräder entsprechend ausgestaltet sein. Die integrierte Ausgestaltung ermöglicht in vorteilhafter Weise eine rationellere Fertigung, und die reduzierte Anzahl der Bauteile ermöglicht eine vereinfachte Montage. Darüber hinaus kann eine kompaktere Bauweise mit geringerem Bauraumbedarf und reduziertem Gewicht realisiert werden.

Eine vorteilhafte Weiterbildung kann vorsehen, dass das Reibelement einstückig mit dem Antriebsrad ausgebildet ist. Dadurch können die Funktionselemente zur Einkopplung des Antriebsmoments, beispielsweise ein Zahnkranz oder dergleichen, zusammen mit dem Reibelement an einem durchgehend integrierten Bauteil realisiert sein, was insbesondere im Hinblick auf eine kompakte Bauform und ein geringes Gewicht vorteilhaft ist. Dadurch, dass keine Fügeverbindungen erforderlich sind, kann zudem die Fertigung vereinfacht und die Belastbarkeit erhöht werden.

Es kann vorgesehen sein, dass das Antriebsrad ein Gussteil aufweist. Das Gussteil kann ein Spritzgussteil aus einem thermoplastischen Kunststoff sein, der gegebenenfalls zur Erhöhung der Festigkeit faserverstärkt sein kann, oder ein Druckgussteil aus einem metallischen Werkstoff, beispielsweise aus Aluminium-, Magnesium- oder Zinklegierungen. Das Reibelement kann dabei einstückig in dem Gussverfahren an dem Antriebsrad angeformt sein. Dadurch wird eine rationelle Fertigung und eine gewichtssparende und montagefreundliche Ausführung ermöglicht.

Es ist ebenfalls möglich, dass Antriebsrad aus miteinander verbundenen Gussteilen auszubilden, beispielsweise im Zweikomponenten-Spritzguss, bei dem das Reibelement aus einem anderen Werkstoff bestehen kann als andere Funktionselemente des Antriebsrads, beispielsweise eine Nabe oder ein umlaufender Zahnkranz. Es ist auch denkbar und möglich, dass verschiedene Funktionselemente des Antriebsrads in einem Spritzverfahren stoffschlüssig zu einem einstückigen Bauteil miteinander verbunden werden. Beispielsweise kann ein Reibelement mit einem Zahnkranz aus einem Kunststoff umspritzt werden, oder in einen Zahnkranz kann ein Nabenteil aus Kunststoff eingespritzt sein, welches mit dem Reibelement verbunden ist.

Alternativ kann vorgesehen sein, dass das Antriebsrad einteilig oder einstückig durch zerspanende Bearbeitung erzeugt ist, beispielsweise aus Stahl. Es können auch kombinierte Bearbeitungsverfahren eingesetzt werden, beispielsweise kann ein Guss- oder Pressteil nachträglich spanend bearbeitet werden.

Es kann vorgesehen sein, dass das Antriebsrad ein Sinterteil aufweist. Mittels Sintern lassen sich auch aufwendige und kompliziertere Geometrien und Formen wirtschaftlich in hoher Stückzahl herstellen.

Es kann vorgesehen sein, dass das Antriebsrad ein Zahnrad aufweist, beispielsweise ein Stirnrad. Dieses kann einen an einem Nabenteil außen koaxial umlaufenden Zahnkranz aufweisen. Das Reibelement kann erfindungsgemäß zusammen mit dem Zahnkranz einteilig oder einstückig mit dem Nabenteil ausgebildet sein. Die Fertigung kann in einem Gussverfahren erfolgen, beispielsweise als Kunststoff-Spritzgussteil oder als Metall-Druckgussteil, und zusätzlich oder alternativ durch spanende Bearbeitung.

Um die für die jeweilige Funktion geforderten Oberflächeneigenschaften zu optimieren, kann das erfindungsgemäß einteilige oder einstückige Antriebsrad zumindest abschnittweise eine Oberflächenbeschichtung und/oder eine Oberflächenstrukturierung aufweisen. Beispielsweise kann im Bereich einer Verzahnung eines Zahnrads eine Oberflächenbeschichtung aufgebracht sein, um das Abwälz- und Verschleißverhalten zu optimieren und die Geräuschbildung zu verringern, beispielsweise in Form einer reibungsmindernden Kunststoffbeschichtung. Im Bereich der Reibflächen kann durch gezielte Modifikation einer oder beider Reibflächen eine optimierte Reibpaarung mit einem definierten Haft- und Reibverhalten erzeugt werden, beispielsweise durch Vorgabe einer definierten Rauhigkeit, und/oder einer Beschichtung mit angepassten Reibungswerten bei geringem Verschleiß, etwa durch eine Hartstoffbeschichtung oder einer Oberflächenmodifikation durch partielle thermische Behandlung oder dergleichen.

Vorzugsweise kann vorgesehen sein, dass die Reibelemente konisch ausgebildet sind.

Das eine Reibelement weist eine zumindest abschnittweise konische Außenfläche auf, welche die eine Reibfläche bildet, die in der axialen Verstellrichtung kegelförmig zusammenläuft. Das andere Reibelement, also das korespondierende Gegenreibelement, weist eine Kegelöffnung mit einer an die Außenfläche angepassten konische Innenfläche auf, welche die andere Reibfläche bildet. Die Reibflächen weisen denselben Kegelwinkel (Konuswinkel) auf und sind bezüglich Durchmesser und axialer Länge so aufeinander abgestimmt, dass sie durch eine in der axialen Verstellrichtung ausgeübte Betätigungskraft der Kupplung in flächigen Reibkontakt miteinander gebracht werden können. Die konische Ausbildung der Reibflächen hat den Vorteil, dass durch die Vorgabe des Kegelwinkels eine definierte Kraftübersetzung zwischen der axial auf die Reibelemente ausgeübten Betätigungs- oder Vorspannkraft der Kupplung und der dadurch zwischen den konischen Reibflächen wirkenden Normalkraft erzeugt werden kann, welche die zur Übertragung des Kupplungsmoments maßgebliche Reibungskraft in Umfangsrichtung bestimmt. Dabei kann durch einen relativ kleinen Konuswinkel eine hohe Kraftübersetzung erzeugt werden, bei der durch eine relativ geringe Betätigungs- oder Vorspannkraft eine relativ hohe Reibpressung zwischen den konischen Reibflächen und ein entsprechend hohes Kupplungsmoment realisiert werden kann.

Der Kegelwinkel ist bevorzugt derart bemessen, dass keine Selbsthemmung zwischen den Reibflächen vorliegt. Somit kann eine sichere Entkupplung sichergestellt werden.

Der halbe Kegelwinkel α/2 ist größer als Arkustangens des zwischen den Reibflächen wirkenden Haftreibungskoeffizienten µ. Es gilt somit: α/2 > arctan (µ). Besonders bevorzugt ist der halbe Kegelwinkel α/2 größer als 7°, ganz besonders bevorzugt 10°.

Bei der vorgenannten Ausführung kann vorgesehen sein, dass die Reibelemente kegelstumpfförmig ausgebildet sind. Das eine Reibelement weist dabei einen in der Verstellrichtung axial konvex vorstehenden Kegelstumpf auf mit einer ringförmig umlaufenden konischen Außenfläche, welche die eine Reibfläche bildet. Das andere Reibelement weist eine axial begrenzte, an den Kegelstumpf formschlüssig angepasste Kegelöffnung mit einer ringförmigen konischen Innenfläche auf, welche die andere Reibfläche bildet. Um die Reibkupplung in Eingriff zu bringen, wird der Kegelstumpf axial in die Kegelöffnung eingebracht, bis die konischen Reibflächen in Reibkontakt gelangen, d.h. reibschlüssig gegeneinander anliegen. Die Reibflächen können die Form von koaxial umlaufenden konischen Ringen haben, die erfindungsgemäß einteilig oder einstückig mit dem Antriebsrad ausgebildet sind. Dadurch kann ein Spindeltrieb eines der Stelltriebe koaxial zu den Reibflächen durch die Antriebsräder hindurchgeführt sein, wodurch eine besonders kompakte Bauweise ermöglicht wird.

Es ist vorteilhaft, dass die Reibelemente axial voneinander beabstandete Stirnflächen aufweisen. Der Kegelstumpf weist stirnseitig an seinem konisch zusammenlaufenden Ende eine Stirnfläche auf, die eine Axialfläche aufweist. Die Kegelöffnung weist an ihrem inneren Ende ebenfalls eine axiale Stirnfläche auf, welche die Innenfläche axial begrenzt, und die mit anderen Worten eine axiale Bodenfläche der Kegelöffnung bildet, welche der stirnseitigen Axialfläche des Kegelstumpfes axial gegenüberliegt. Die konischen Reibflächen sind dabei so ausgestaltet und bemessen, dass die Axialflächen im reibschlüssigen Kupplungseingriff einen axialen Abstand voneinander aufweisen.

Alternativ oder zusätzlich zu der vorgenannten Ausführung kann vorgesehen sein, dass die Reibflächen planar ausgebildet. Dabei weisen das Reibelement und das korrespondierende Gegenreibelement ebene Reibflächen auf, die zumindest abschnittweise als plane Axialflächen ausgebildet sein können, ähnlich wie bei einer Scheibenkupplung.

Bei der Erfindung ist zwischen den Antriebsrädern eine Reibkupplung realisiert. Diese umfasst ein Reibelement, welches mit dem einen der Antriebsräder drehmomentschlüssig verbunden ist, und ein damit korrespondierendes Gegenreibelement, welches mit dem jeweils anderen Antriebsrad drehmomentschlüssig verbunden ist. Das Reibelement kann mit dem Gegenreibelement in jeder beliebigen relativen Winkelstellung in reibschlüssigen Kupplungseingriff gebracht werden. Dabei wird eine rein kraftschlüssige Kupplung realisiert, im Unterschied zu der formschlüssigen Rastverbindung im eingangs genannten Stand der Technik. Dadurch kann die relative Stellung der Antriebsräder zueinander kontinuierlich vorgegeben werden. Entsprechend ist eine gleichmäßige, kontinuierliche Verstellung des zweiten Stelltriebs relativ zum ersten Stelltreib ermöglicht, und es kann eine kontinuierliche Justierung des Luftspalts erfolgen. Dies ist besonders vorteilhaft im Hinblick auf eine gleichmäßige Nachführung des optimalen Arbeitspunkts der Bremsvorrichtung an die kontinuierliche Abnutzung des Bremsteils im Betrieb, d.h. dem kontinuierlichen Verschleiß des Bremsbelags. Dadurch kann ein verbessertes Ansprechverhalten der Bremsvorrichtung realisiert werden, und damit eine erhöhte Betriebssicherheit und ein höherer Bedienkomfort.

Ein weiterer Vorteil gegenüber der eingangs erwähnten Rastkupplung ist, dass zum Betätigen und Lösen der Kupplungsvorrichtung im Wesentlichen keine axiale Relativbewegung zwischen den im Kupplungseingriff stehenden Kupplungselementen erforderlich ist, beispielsweise zwischen den Antriebsrädern oder den Rastelementen, die zum Erzeugen und Lösen des rastbaren Formschlusses zwangsläufig zueinander bewegbar sein müssen. Dagegen kann der reine Kraftschluss zwischen dem erfindungsgemäßen Reib- und Gegenreibelement einfach durch die angelegte axiale Betätigungskraft vorgegeben werden, wobei Reib- und Gegenreibelement nicht axial relativ zueinander bewegt werden müssen. Dadurch wird eine einfachere und zuverlässigere konstruktive Gestaltung der Kupplungsvorrichtung ermöglicht.

Es ist möglich, dass die Reibkupplung ein definiert vorgebbares Kupplungsmoment aufweist. Das Kupplungsmoment gibt das maximale Differenzmoment an, welches durch den Reibschluss im Kupplungseingriff kraftschlüssig zwischen den Reibelementen übertragen werden kann. Beim Überschreiten des Kupplungsmoments rutscht die Kupplungsvorrichtung durch, so dass die beiden Antriebsräder relativ zueinander verdreht werden. Ein Vorteil dabei ist, dass die erfindungsgemäße Reibkupplung kontinuierlich gleitend durchrutscht, so dass eine verbesserte, gleichmäßige Nachjustierung des Luftspalts ermöglich wird. Darüber hinaus müssen keine axialen Ausweichbewegungen von Rastelementen wie bei der bekannten Rastkupplung konstruktiv berücksichtigt und abgefangen werden.

Es ist vorteilhaft, dass die Reibelemente koaxial angeordnet sind. Dabei korrespondiert die koaxiale Anordnung mit der koaxialen Anordnung der Antriebsräder. Die Reibelemente können konstruktiv einfach und in einer kompakten Bauform im Bereich der axial gegeneinander gerichteten Stirnseiten der Antriebsräder angeordnet sein.

Es ist möglich, dass eines oder beide Reibelemente in dem ersten Antriebsrad oder dem zweiten Antriebsrad angeordnet ist. So ist es beispielsweise möglich, das eine Antriebsrad im Wesentlichen trommelförmig zu gestalten, so dass in einem von dem umlaufenden Zahnrad oder Zahnkranz umschlossenen Innenraum das Reib- oder Gegenreibelement angeordnet sein kann. Dadurch wird eine kompakte, gegen äußere Einflüsse geschützte Bauform ermöglicht. So kann beispielsweise das Antriebsrad des ersten Stelltriebs ein konisches Reibelement aufweisen, welches axial in ein als Innenkonus ausgebildetes Gegenreibelement eingreift, das zumindest teilweise innerhalb des zweiten Antriebsrads angeordnet ist.

Eine besonders kompakte Bauform kann - insbesondere bei der zuletzt genannten Ausführung - dadurch realisiert sein, dass die Antriebsräder innerhalb der axialen Erstreckung der Stelltriebe angeordnet sind, also nicht einseitig axial vorstehend angebracht sind.

Es ist bevorzugt, dass ein oder beide Reibelemente einen Reibbelag aufweisen. Die Reibelemente können beispielsweise einen metallischen Grundkörper aufweisen, beispielsweise aus Stahl oder Metallguss. Zur Vermeidung von Metall-Metall-Kontakt kann bevorzugt eine Beschichtung oder ein Belag zur Erzeugung einer Reibpaarung mit einer definierten Reibkraft aufgebracht sein, beispielsweise aus Sinter-, Metall- und/oder Keramikreibwerkstoffen, Verbundwerkstoffen oder dergleichen. Dadurch kann ein definiertes, reproduzierbares Kupplungsmoment gewährleistet werden.

Es kann vorgesehen sein, dass ein Stelltrieb einen Spindeltrieb aufweist. Dabei greift in an sich bekannter Weise eine Gewindespindel in eine Spindelmutter ein, und ein relativer drehender Antrieb über ein mit der Gewindespindel oder der Spindelmutter verbundenes Antriebsrad. Es ist möglich, dass die Spindelmutter das antriebsseitige Antriebselement des Stelltriebs bildet, und die Gewindespindel das relativ dazu linear verstellbare, ausgangsseitige Abtriebselement, oder umgekehrt.

Erfindungsgemäß ist es bevorzugt möglich, das das Spindelgewinde einteilig, oder besonders bevorzugt einstückig mit einem Antriebsrad ausgebildet ist. Auf diese Weise kann zusätzlich zur Funktion des Reibelements die Funktion der Spindelmutter eines Spindeltriebs mit dem Antriebsrad integriert ausgebildet sein. Dadurch wird ein reduzierter Fertigungs- und Montageaufwand und eine weitere Bauraum- und Gewichtsersparnis ermöglicht.

Es ist möglich, dass ein Stelltrieb eine Kugelrampenanordnung, Keilscheibenanordnung, oder eine Kippstiftanordnung aufweist. Bei einer Kugelrampenanordnung, auch als Rampenlager bezeichnet, weisen das Antriebs- und Abtriebselement bevorzugt Kurvenscheiben mit gegen die Achse geneigten Laufbahnen oder Rampen auf, zwischen denen in Umfangsrichtung abwälzbare Kugeln angeordnet sind. Eine relative Drehung führt durch die dabei auf den Rampen abrollenden Kugel dazu, dass das Abtriebselement relativ zum Antriebselement axial verlagert wird. Bei einer an sich bekannten Kippstiftanordnung sind Kippstifte derart zwischen Antriebs- und Abtriebselement angeordnet und jeweils in Umfangsrichtung abgestützt, dass sie bei einer relativen Drehung je nach Drehrichtung stärker oder schwächer gegen die Achse geneigt sind, wodurch der Abstand zwischen Antriebs- und Abtriebselement ebenfalls verstellbar ist.

Es ist möglich, dass das Antriebsrad mindestens ein Funktionselement eines Stelltriebs aufweist. Damit ist es möglich, Funktionselemente eines oder beider Stelltriebe in einem erfindungsgemäß integrierten Antriebsrad baulich zu vereinen. Beispielsweise kann ein Antriebsrad einteilig oder einstückig ein Innengewinde einer Spindelmutter, Laufbahnen einer Kugelrampenanordnung, Keilelemente einer Keilscheibenanordnung, Stützelemente einer Kippstiftanordnung oder dergleichen aufweisen, und zusätzlich oder alternativ ein Spindelgewinde einer Spindelmutter oder dergleichen. Dadurch können in vorteilhafter Weise mehrere Funktionen ein einem einteiligen, oder bevorzugt einstückigen erfindungsgemäßen Antriebsrad realisiert werden. Dadurch kann eine weitere Bauraum- und Gewichtsersparnis realisiert werden, bei einem reduzierten Fertigungsaufwand.

In der Stellvorrichtung können zwei gleichartig wirkende Stelltriebe als erste und zweite Stelltriebe miteinander kombiniert sein, beispielsweise zwei Spindeltriebe. Es ist auch möglich, zwei unterschiedliche Bauarten miteinander zu kombinieren, beispielsweise eine Kugelrampenanordnung als ersten Stelltrieb, und einen Spindeltrieb als zweiten Stelltrieb zur Justierung des Luftspalts. Dabei können die jeweiligen charakteristischen Eigenschaften jeder Bauform optimal ausgenutzt werden. Beispielsweise kann mit einer Kugelrampenanordnung mit geringem Aufwand eine nichtlineare Verstellcharakteristik realisiert werden, und/oder zumindest abschnittweise selbsthemmende Eigenschaften, und/oder eine definierte Totpunkt- oder Strecklage, die einen definierten Verstellweg ermöglicht. Die Realisierung der genannten positiven Eigenschaften kann zumindest teilweise eine präzise Vorgabe des Luftspalts erfordern, was mit der Rastkupplung im Stand der Technik nicht möglich ist, mittels der erfindungsgemäßen Reibkupplung jedoch problemlos realisiert werden kann.

Bei einem Verfahren zum Betrieb einer elektromechanischen Bremsvorrichtung, die eine Stellvorrichtung umfassend einen ersten Stelltrieb und einen seriell damit gekoppelten Stelltrieb aufweist, und welche auf ein Bremsteil wirkt, das in Richtung einer Achse mit einem Gegenbremsteil in Bremseingriff bringbar ist, wobei der erste Stelltrieb ein drehend antreibbares erstes Antriebsrad aufweist, auf das zur Betätigung ein erstes Antriebsmoment aufgebacht werden kann, und der zweite Stelltrieb ein drehend antreibbares, zu dem ersten Antriebsrad koaxiales zweites Antriebsrad aufweist, auf das zur Betätigung ein zweites Antriebsmoment aufgebracht werden kann, wobei zwischen dem ersten Antriebsrad und dem zweiten Antriebsrad eine Kupplungsvorrichtung angeordnet ist, kann vorgesehen sein, dass die Kupplungsvorrichtung als Reibkupplung ausgebildet ist und ein vorgebbares Kupplungsmoment aufweist, bei dessen Überschreiten das erste Antriebsrad relativ zum zweiten Antriebsrad gleitend durchrutscht, wobei zur Betätigung des ersten Stelltriebs das erste Antriebsrad und das zweite Antriebsrad synchron angetrieben werden, so dass der zweite Stelltrieb unbetätigt bleibt, und zur Betätigung des zweiten Stelltriebs das zweite Antriebsrad angetrieben wird, und das erste Antriebsrad relativ dazu stillgesetzt wird, so dass die Reibkupplung durchrutscht und er erste Stelltrieb unbetätigt bleibt.

Die vorangehend im Zusammenhang mit der erfindungsgemäßen Bremsvorrichtung genannten Merkmale können einzeln und in Kombinationen zur Umsetzung des Verfahrens genutzt werden.

Zur Verstellung des ersten Stelltriebs kann mittels eines ersten elektrischen Stellmotors ein Stellmoment in das erste Antriebsrad eingekoppelt werden, und entsprechend kann der zweite Stelltrieb durch einen zweiten elektrischen Stellmotor angetrieben werden.

Im normalen Bremsbetrieb werden das erste und das zweite Antriebsrad synchron rotiert. Dies kann zum einen dadurch erfolgen, dass das erste und zweite Antriebsrad von den ersten und zweiten Stellmotoren mit synchronisierten Antriebsmomenten angetrieben werden. Zum anderen kann das zweite Antriebsrad beim Antrieb des ersten Antriebsrads durch die Kupplungsvorrichtung synchron mitgenommen werden, solange das übertragene Antriebsmoment unterhalb des Kupplungsmoments bleibt. In diesem Betriebsmodus bleibt der zweite Stelltrieb unbetätigt, und dreht als Ganzes zusammen mit dem Bremselement leer mit.

Im Betrieb kann die Kupplungsvorrichtung beim Überschreiten des Kupplungsmoments zur Justierung des Luftspalts kontinuierlich und gleichmäßig gleitend durchrutschen. Dies kann beispielsweise dadurch realisiert werden, dass das Antriebsrad des ersten Stelltriebs festgesetzt wird, beispielsweise durch eine Bremse oder eine entsprechende Ansteuerung des ersten Antriebsmotors, während durch den zweiten Antriebsmotor ein zweites Antriebsmoment auf das zweite Antriebsrad aufgebracht wird, welches größer ist als das Kupplungsmoment. Dadurch wird das zweite Antriebsrad relativ zum ersten Antriebsrad verdreht, und durch Betätigung des zweiten Stelltriebs kann der Luftspalt kontinuierlich und feinfühlig justiert werden, so dass eine kontinuierlich fortschreitende Abnutzung des Bremselements bzw. des Bremsbelags optimal ausgeglichen werden kann.

Es ist möglich, dass das erste Antriebsrad und das zweite Antriebsrad zur Erzeugung eines synchronen Antriebs durch die Reibkupplung drehmomentschlüssig gekuppelt werden.

Dabei ist im kein synchroner Antrieb der beiden Antriebsräder durch die Stellmotoren erforderlich. Eventuelle Drehmomentdifferenzen können innerhalb vorgegebener Toleranzen ausgeglichen werden.

Es kann mit Vorteil vorgesehen sein, dass bei der Betätigung des ersten Stelltriebs ein höheres Kupplungsmoment vorgegeben wird, als bei der Betätigung des zweiten Stelltriebs. Der erste Stelltrieb wird durch synchronen Antrieb des ersten und des zweiten Antriebsrads betätigt. Das Reibelement und das Gegenreibelement werden durch die Federkraft des Federelements gegeneinander vorgespannt, und zusätzlich wirkt entgegengesetzt zur Federkraft die Verstellkraft des ersten Stelltriebs. Dadurch wird ein relativ hohes Kupplungsmoment realisiert. Wird hingegen zur Justierung des Luftspalts nur das zweite Antriebsrad gedreht, so wirkt allein die Federkraft, so dass ein niedrigeres Kupplungsmoment eingestellt wird. Dadurch wird die Justierung des Luftspalts erleichtert.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Bremsvorrichtung in einer schematischen perspektivischen Ansicht,
- Figur 2: eine seitliche Ansicht der Bremsvorrichtung gemäß Figur 1,
- Figur 3: die erfindungsgemäße Stellvorrichtung der Bremsvorrichtung gemäß Figur 1 freigestellt in einer schematischen perspektivischen Ansicht,
- Figur 4: einen Schnitt Q-Q durch die Bremsvorrichtung gemäß Figur 1,
- Figur 5: den ersten Stelltrieb der Bremsvorrichtung gemäß Figur 1 freigestellt in einer schematischen perspektivischen Darstellung,
- Figur 6: eine erfindungsgemäße Stellvorrichtung gemäß Figur 4 in einer schematisch aufgeschnittenen perspektivischen Ansicht,
- Figur 7: eine vergrößerte Detailansicht aus Figur 6.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

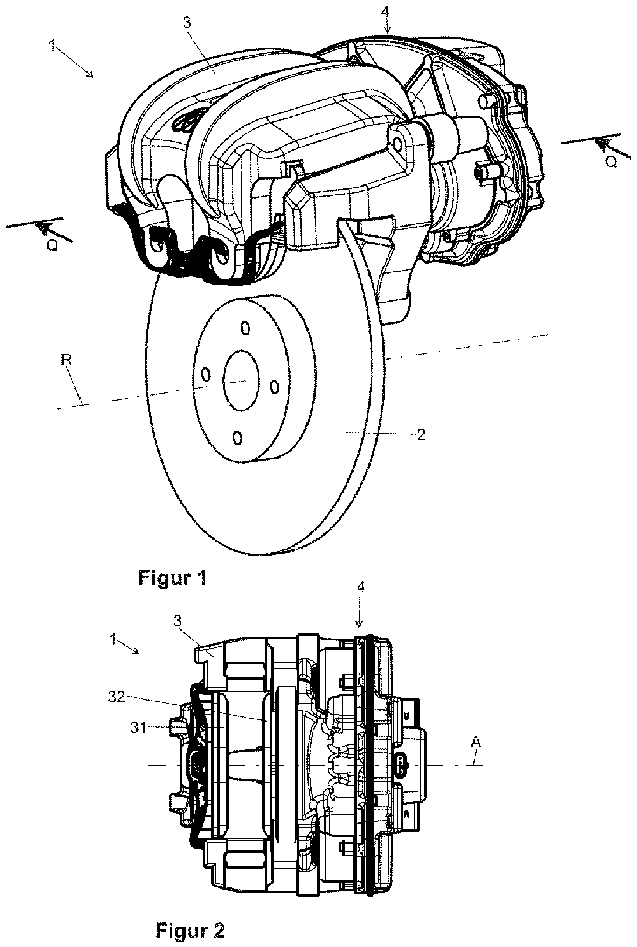

Fig. 1 zeigt eine erfindungsgemäße Bremsvorrichtung als Ganzes, die als Scheibenbremse ausgebildet ist. Diese umfasst eine Bremsscheibe 2, die ein Gegenbremsteil im Sinne der Erfindung bildet und mit einem hier nicht dargestellten, um eine Radachse R rotierbaren Fahrzeugrad verbunden ist. Ein Bremssattel 3 umgreift die beiden axialen Stirnflächen der Bremsscheibe 2.

Die Bremsscheibe 2 ist hier als unbelüftete Bremscheibe aus Vollmaterial ausgebildet. Alternativ kann diese auch als innenbelüftete Bremsscheibe ausgebildet sein.

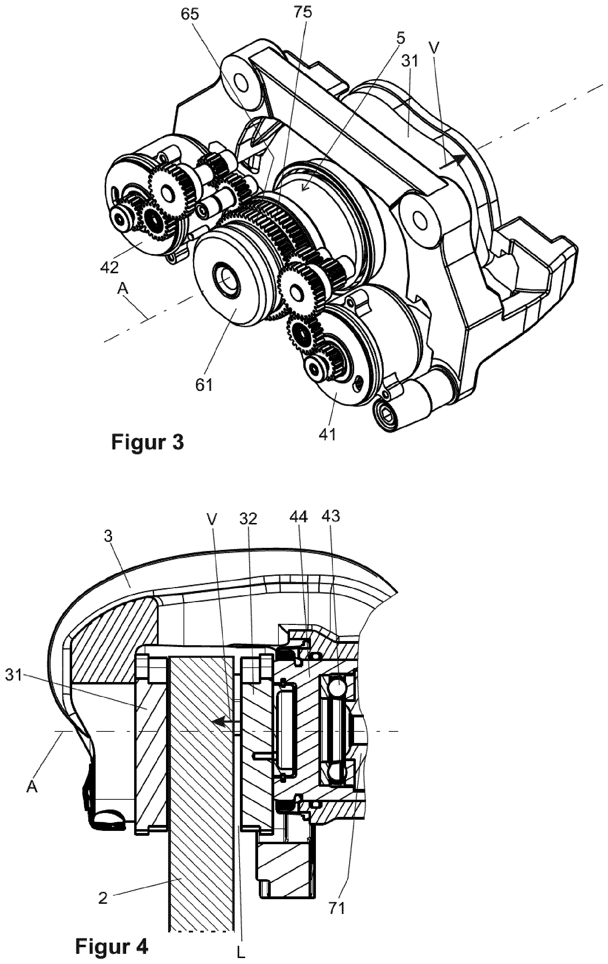

An dem Bremssattel 3 ist ein erfindungsgemäßer elektrischer Bremsaktuator 4 angebracht, die in Figur 3 in einer separaten, freigestellten schematischen perspektivischen Ansicht gezeigt ist, und in den Figuren 4 bis 7 im Detail erläutert wird.

Der Bremsaktuator 4 umfasst eine Stellvorrichtung 5 die sich axial in Richtung einer Achse A erstreckt, welche parallel zur Radachse R liegt und die Verstellrichtung V der Stellvorrichtung 5 angibt.

Wie in der Schnittdarstellung von Figur 4 längs der Achse A erkennbar ist, ist die Bremsscheibe 2 axial zwischen zwei Bremsbelägen 31 und 32 angeordnet. Der eine Bremsbelag 31 ist auf der dem Bremsaktuator 4 abgewandten Seite fest an dem Bremssattel 3 abgestützt. Der andere Bremsbelag 32, der ein Bremsteil im Sinne der Erfindung bildet, ist an der Stellvorrichtung 5 angebracht und von dieser in der durch die Achse A gegebenen, axialen Verstellrichtung V zur Erzeugung des Bremseingriffs auf die Bremsscheibe 2 zu verstellbar, wie in Figur 4 mit dem Pfeil angedeutet ist.

Im unbetätigten Zustand der Bremsvorrichtung 1 befindet sich zwischen der Bremsscheibe 2 und dem verstellbaren Bremsbelag 32 ein axialer Luftspalt L, der in Figur 4 schematisch übertrieben breit eingezeichnet ist.

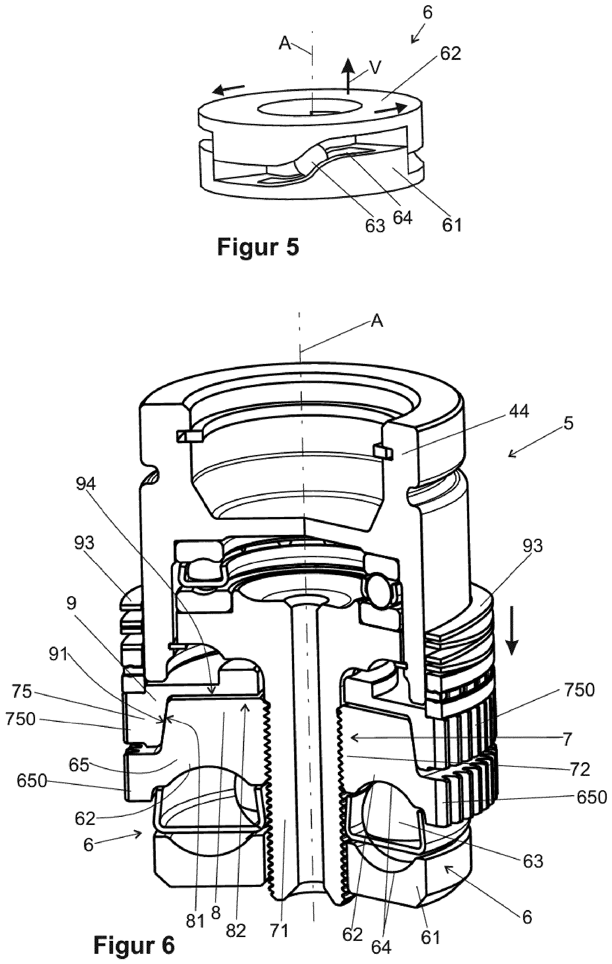

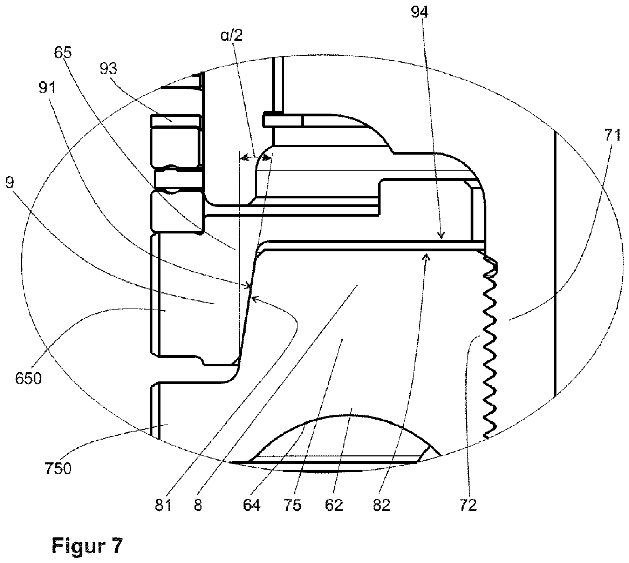

Der Aufbau der Stellvorrichtung 5 ist in Figur 4 und in einer perspektivischen, schematisch längs der Achse A teilweise aufgeschnittenen Ansicht in Figur 6 dargestellt. Figur 7 zeigt einen vergrößerten Ausschnitt aus Figur 6.

Die Stellvorrichtung 5 umfasst einen ersten Stelltrieb 6, der ein Rampenlager aufweist, und einen damit axial (bezüglich der Achse A) seriell gekoppelten zweiten Stelltrieb 7, der einen Spindeltrieb aufweist.

Der erste Stelltrieb 6, der im gezeigten Beispiel als Rampenlager ausgebildet ist, umfasst eine axial und drehfest an dem Bremsaktuator 4 abgestützte, antriebseitige Kurvenscheibe 61 und eine abtriebsseitige Kurvenscheibe 62. Zwischen den Kurvenscheiben 61 und 62 sind Kugeln 63 angeordnet. Wie in der schematisch freigestellten Ansicht von Figur 5 erkennbar ist, weisen die Kurvenscheiben 61 und 62 einander axial gegenüberliegende rampenartige, schräg zur Achse A liegende Laufbahnen 64 auf, zwischen denen Kugeln 63 abwälzbar sind. Eine Drehung der abtriebsseitigen Kurvenscheibe 62, in Figur 5 oben, relativ zu der feststehenden antriebsseitigen Kurvenscheibe 61 - wie schematisch mit den gebogenen Pfeilen angedeutet - führt zu einer linearen Verstellung der abtriebsseitigen Kurvenscheibe 62 in der Verstellrichtung V parallel zur Achse A. Dadurch kann der Bremsbelag 32 wie in Figur 4 eingezeichnet durch Betätigung des ersten Stelltriebs 6 in Bremseingriff gebracht werden.

Die Kurvenscheibe 62 ist mit einem koaxialen Zahnrad 65 verbunden, welches als Stirnrad mit einem außen koaxial umlaufenden Zahnkranz 650 ausgebildet ist und ein Antriebsrad im Sinne der Erfindung bildet. Die Kurvenscheibe 62 ist im gezeigten Beispiel einstückig mit dem Zahnrad 65 ausgebildet. Dieses ist erfindungsgemäß ausgestaltet, wie weiter unten noch erläutert wird.

Das Zahnrad 65 steht über den Zahnkranz 650 im Getriebeeingriff mit einem ersten elektrischen Stellmotor 41. Dieser ermöglicht den drehenden Antrieb der Kurvenscheibe 62 und damit eine Betätigung des ersten Stelltriebs 6.

Der zweite Stelltrieb 7, der im gezeigten Beispiel als Spindeltrieb ausgebildet ist, weist abtriebsseitig eine Gewindespindel 71 auf, die in das Innengewinde einer antriebsseitigen Spindelmutter 72 eingreift. Dieses Innengewinde ist in der einstückig mit dem Zahnrad 65 ausgebildeten abtriebsseitigen Kurvenscheibe 62 des ersten Stelltriebs 6 ausgebildet, so dass das die Funktionen der abtriebsseitigen Kurvenscheibe 62 und der antriebsseitigen Spindelmutter 72 in dem Zahnrad 65 baulich vereinigt sind.

Das Zahnrad 65 ist axial abgestützt (fixiert) in dem Bremsaktuator 4 drehbar gelagert.

Das Zahnrad 75 kann analog zu dem Zahnrad 65 als Stirnrad mit einem umlaufenden Zahnkranz 750 ausgeführt sein und ist zu diesem benachbart koaxial angeordnet. Das Zahnrad 75 steht im Getriebeeingriff mit einem zweiten elektrischen Stellmotor 42. Dieser ermöglicht den drehenden Antrieb der Gewindespindel 71 und damit eine Betätigung des zweiten Stelltriebs 7.

Die Gewindespindel 71 ist über ein Drucklager 43, beispielsweise wie dargestellt ein Axialwälzlager, axial mit einem Druckstück 44 verbunden, an dem der verlagerbare Bremsbelag 32 angebracht ist, wie in Figur 4 erkennbar ist. Das Druckstück 44 kann auch als Kolben bezeichnet werden.

Die erfindungsgemäße Kupplungsvorrichtung weist ein Reibelement 8 auf, welches als koaxialer, konischer Ansatz von der Kurvenscheibe 62 auf den zweiten Stelltrieb 7 zu gerichtet ist. Der konische Ansatz weist eine außen auf einem Außenkonus angeordnete konische Reibfläche 81 auf. Das Reibelement 8 ist erfindungsgemäß einteilig, im gezeigten Beispiel einstückig mit dem Zahnrad 65 ausgebildet. Wie oben erwähnt können die Kurvenscheibe 62 und die Spindelmutter 72 ebenfalls einstückig damit ausgebildet sein.

Das Reibelement 8 ist im Kupplungseingriff reibschlüssig mit einem Gegenreibelement 9 gekuppelt. Dabei taucht der konische Ansatz axial in eine korrespondierende konische Öffnung, d.h. eine Kegelöffnung des Gegenreibelements 9 ein, welche eine in einem Innenkonus angeordnete konische Reibfläche 91 aufweist. Im Kupplungseingriff liegen die Reibfläche 81 und die Gegenreibfläche 91 reibschlüssig gegeneinander an, wie in Figur 6 deutlich erkennbar ist.

Das Reibelement 9 ist erfindungsgemäß einteilig, im gezeigten Beispiel einstückig mit dem Zahnrad 75 ausgebildet.

Zwischen dem Zahnrad 75 und einem feststehenden Teil des Bremssattels 3 ist ein Federelement 93 angeordnet. Durch dessen axial wirksame Federkraft wird das Gegenreibelement 9 gegen das Reibelement 8 elastisch verspannt, wie in Figur 6 mit dem nach unten gerichteten Pfeil angedeutet ist. Mit anderen Worten erzeugt das Federelement 93 eine Betätigungskraft der Reibkupplung. Diese Betätigungskraft wird über den flach zusammenlaufenden Kegelwinkel in eine erhöhte Normalkraft umgesetzt, mit der die Reibflächen 81 und 91 im Kupplungseingriff gegeneinander belastet werden. Dadurch wird ein definiertes Kupplungsmoment der durch das Reibelement 8 und das Gegenreibelement 9 gebildeten erfindungsgemäßen Reibkupplung erzeugt.

Das Reibelement 8 ist kegelstumpfförmig ausgebildet und weist eine ebene axiale Stirnfläche 82 auf, die den Kegelstumpf in der Verstellrichtung begrenzt, und in Figur 6 oben liegt. Die Kegelöffnung des Gegenreibelements 9 weist ebenfalls eine ebene axiale Stirnfläche 94 auf, die den - in Figur 6 oben liegenden - Boden der Kegelöffnung bildet. Die einander axial gegenüberliegenden Stirnflächen 82 und 94 haben im Kupplungseingriff, wenn die Reibflächen 81 und 91 kraftschlüssig gegeneinander anliegen, axialen Abstand voneinander.

Zur Betätigung der Bremsvorrichtung 1 werden die Zahnräder 65 und 75 synchron rotiert, so dass der erste Stelltrieb 6 einen Arbeitshub in Verstellrichtung V ausführt, so dass der Bremsbelag 32 den Luftspalt L passiert und in Bremseingriff mit der Bremsscheibe 2 kommt. Der synchrone Antrieb der Zahnräder 65 und 75 kann durch eine Synchronisierung der Antriebsgeschwindigkeiten der Stellmotoren 41 und 42 bewerkstelligt werden, oder durch den Antrieb durch nur einen der Stellmotoren 41 oder 42, während der jeweils andere Stellmotor 42 oder 41 leer mitläuft. Dann sorgt der reibschlüssige Kupplungseingriff zwischen dem Reibelement 8 und dem Gegenreibelement 9 für eine synchrone Drehung der Zahnräder 65 und 75.

Zur Justierung der Breite des Luftspalts L wird das Zahnrad 65 festgesetzt oder blockiert, beispielsweise durch eine entsprechende Ansteuerung des ersten Stellmotors 41. Durch den zweiten Stellmotor 42 wird das Zahnrad 75 relativ zum Zahnrad 65 verdreht, wobei die Reibkupplung kontinuierlich gleitend durchrutscht. Entsprechend wird der zweite Stelltrieb 7 gleichmäßig verstellt, wodurch die Breite des Luftspalts L ebenfalls kontinuierlich eingestellt und angepasst werden kann, um beispielsweise Abnutzung des Bremsbelags 32 zu kompensieren.

Dadurch, dass das Reibelement 8 und das Gegenreibelement 9 ganz oder zumindest teilweise innerhalb der Zahnräder 65 und 75 angeordnet sind, kann eine besonders kompakte Bauweise realisiert werden.

Die in den Figuren 1 bis 7 dargestellten Bremsvorrichtungen sind als Schwimmsattelbremse, auch als Faustsattelbremse bezeichnet, ausgebildet. Dabei wird der Bremsbelag 32 durch das Druckstück 44, und der Bremsbelag 31 durch den gegenüber der Bremsscheibe 2 in Richtung der Achse A verschiebbaren Bremssattel 3 an die Bremsscheibe 2 gedrückt. Alternativ kann die erfindungsgemäße Lösung auch bei einer Festsattelbremse zum Einsatz kommen.

### Bezugszeichenliste

- 1: Bremsvorrichtung
- 2: Bremsscheibe
- 3: Bremssattel
- 31, 32: Bremsbelag
- 4: Bremsaktuator
- 41, 42: Stellmotor
- 43: Drucklager
- 44: Druckstück
- 5: Stellvorrichtung
- 6: erster Stelltrieb
- 61: Kurvenscheibe
- 62: Kurvenscheibe (integriert mit Spindelmutter 72)
- 63: Kugel
- 64: Laufbahn
- 65: Zahnrad
- 650: Zahnkranz
- 7: zweiter Stelltrieb
- 71: Gewindespindel
- 72: Spindelmutter (integriert mit Kurvenscheibe 62)
- 74: Nabenteil
- 75: Zahnrad
- 750: Zahnkranz
- 8: Reibelement
- 81: Reibfläche
- 82: Stirnfläche
- 9: Gegenreibelement
- 91: Gegenreibfläche
- 92: Mitnehmer
- 93: Federelement
- 94: Stirnfläche

- A: Achse
- R: Radachse
- V: Verstellrichtung
- L: Luftspalt

## Patentansprüche

1. Elektromechanische Bremsvorrichtung (1) für ein Kraftfahrzeug, umfassend eine Stellvorrichtung (5) und ein damit verbundenes Bremsteil (32), das von der Stellvorrichtung (5) entlang einer Achse (A) verstellbar und mit einem Gegenbremsteil (2) in Bremseingriff bringbar ist,
wobei die Stellvorrichtung (5) einen ersten Stelltrieb (6) und einen seriell damit gekoppelten zweiten Stelltrieb (7) aufweist,
wobei der erste Stelltrieb (6) ein drehend antreibbares erstes Antriebsrad (65) aufweist, und der zweite Stelltrieb (7) ein drehend antreibbares, zu dem ersten Antriebsrad koaxiales zweites Antriebsrad (75) aufweist,
wobei zwischen dem ersten Antriebsrad (65) und dem zweiten Antriebsrad (75) eine Reibkupplung angeordnet ist, die zwei Reibelemente (8, 9) mit koaxialen Reibflächen (81, 91) umfasst, die zur Erzeugung eines Kupplungseingriffs reibschlüssig miteinander verbindbar sind,
wobei mindestens ein Reibelement (8, 9) einteilig mit dem ersten Antriebsrad (65) oder dem zweiten Antriebsrad (75) ausgebildet ist,
**dadurch gekennzeichnet,**
**dass** die Reibelemente (8, 9) gegeneinander vorgespannt sind.

2. Bremsvorrichtung nach Anspruch 1, **dadurch gekennzeichnet, dass** das Reibelement (8, 9) einstückig mit dem Antriebsrad (65, 75) ausgebildet ist.

3. Bremsvorrichtung nach einem der vorangehenden Ansprüche, **dadurch gekennzeichnet, dass** das Antriebsrad (65, 75) ein Gussteil oder Sinterbauteil aufweist.

4. Bremsvorrichtung nach einem der vorangehenden Ansprüche, **dadurch gekennzeichnet, dass** das Antriebsrad (65, 75) ein Zahnrad (65, 75) aufweist.

5. Bremsvorrichtung nach einem der vorangehenden Ansprüche, **dadurch gekennzeichnet, dass** das Antriebsrad (65, 75) zumindest abschnittweise eine Oberflächenbeschichtung und/oder eine Oberflächenstrukturierung aufweist.

6. Bremsvorrichtung nach einem der vorangehenden Ansprüche, **dadurch gekennzeichnet, dass** die Reibelemente (8, 9) konisch ausgebildet sind.

7. Bremsvorrichtung nach einem der vorangehenden Ansprüche, **dadurch gekennzeichnet, dass** die Reibelemente (8, 9) kegelstumpfförmig ausgebildet sind.

8. Bremsvorrichtung nach einem der vorangehenden Ansprüche, **dadurch gekennzeichnet, dass** die Reibelemente (8. 9) axial voneinander beabstandete Stirnflächen (82, 94) aufweisen.

9. Bremsvorrichtung nach einem der vorangehenden Ansprüche, **dadurch gekennzeichnet, dass** das Antriebsrad (65, 75) mindestens ein Funktionselement eines Stelltriebs (6, 7) aufweist.

10. Bremsvorrichtung nach einem der vorangehenden Ansprüche, **dadurch gekennzeichnet, dass** die Reibflächen planar ausgebildet sind.

11. Bremsvorrichtung nach einem der vorangehenden Ansprüche, **dadurch gekennzeichnet, dass** zumindest ein Reibelement (8, 9) einen Reibbelag aufweist.

12. Bremsvorrichtung nach einem der vorangehenden Ansprüche, **dadurch gekennzeichnet, dass** ein Stelltrieb (7) einen Spindeltrieb aufweist.

13. Bremsvorrichtung nach einem der vorangehenden Ansprüche, **dadurch gekennzeichnet, dass** ein Stelltrieb (6) eine Keilscheibenanordnung, Kugelrampenanordnung oder eine Kippstiftanordnung aufweist.

## Claims

1. Electromechanical brake device (1) for a motor vehicle, comprising an adjusting device (5) and a brake part (32) which is connected thereto, which can be adjusted along an axis (A) by the adjusting device (5) and can be brought into braking engagement with a counter-brake part (2),
the adjusting device (5) having a first adjusting drive (6) and a second adjusting drive (7) coupled serially thereto,
the first adjusting drive (6) having a first drive wheel (65) which can be driven in rotation, and the second adjusting drive (7) having a second drive wheel (75) which can be driven in rotation and is coaxial with the first drive wheel,
a friction clutch being arranged
between the first drive wheel (65) and the second drive wheel (75), which friction clutch comprises two friction elements (8, 9) with coaxial friction surfaces (81, 91) which can be connected to one another in a frictionally engaging manner in order to produce a clutch engagement,
wherein at least one friction element (8, 9) is formed in one piece with the first drive wheel (65) or the second drive wheel (75),
**characterized in**
**in that** the friction elements (8, 9) are prestressed against one another.

2. Braking device according to claim 1, **characterized in that** the friction element (8, 9) is formed integrally with the drive wheel (65, 75).

3. Braking device according to one of the preceding claims, **characterized in that** the drive wheel (65, 75) comprises a cast part or sintered component.

4. Braking device according to one of the preceding claims, **characterized in that** the drive wheel (65, 75) comprises a toothed wheel (65, 75).

5. Braking device according to one of the preceding claims, **characterized in that** the drive wheel (65, 75) has a surface coating and/or a surface structuring at least in sections.

6. Braking device according to one of the preceding claims, **characterized in that** the friction elements (8, 9) are conical.

7. Braking device according to one of the preceding claims, **characterized in that** the friction elements (8, 9) are of frustoconical design.

8. Braking device according to one of the preceding claims, **characterized in that** the friction elements (8. 9) have end faces (82, 94) which are axially spaced apart from one another.

9. Braking device according to one of the preceding claims, **characterized in that** the drive wheel (65, 75) has at least one functional element of an actuating drive (6, 7).

10. Braking device according to one of the preceding claims, **characterized in that** the friction surfaces are planar.

11. Braking device according to one of the preceding claims, **characterized in that** at least one friction element (8, 9) has a friction lining.

12. Braking device according to one of the preceding claims, **characterized in that** an adjusting drive (7) has a spindle drive.

13. Braking device according to one of the preceding claims, **characterized in that** an adjusting drive (6) has a wedge disc arrangement, ball ramp arrangement or a rocker pin arrangement.

## Revendications

1. Dispositif de freinage électromécanique (1) pour un véhicule automobile, comprenant un dispositif de réglage (5) et un élément de freinage (32) relié à celui-ci, qui peut être déplacé par le dispositif de réglage (5) le long d'un axe (A) et peut être amené en engagement de freinage avec un élément de freinage antagoniste (2),
le dispositif de réglage (5) présentant un premier entraînement de réglage (6) et un deuxième entraînement de réglage (7) couplé en série avec celui-ci,
le premier entraînement de réglage (6) présentant une première roue d'entraînement (65) pouvant être entraînée en rotation, et le deuxième entraînement de réglage (7) présentant une deuxième roue d'entraînement (75) pouvant être entraînée en rotation et coaxiale à la première roue d'entraînement,
un embrayage à friction étant disposé
entre la première roue d'entraînement (65) et la deuxième roue d'entraînement (75), lequel comprend deux éléments de friction (8, 9) avec des surfaces de friction (81, 91) coaxiales qui peuvent être reliées entre elles par friction pour produire un engagement d'embrayage,
au moins un élément de friction (8, 9) étant réalisé d'une seule pièce avec la première roue motrice (65) ou la deuxième roue motrice (75),
**caractérisé en ce que**
que les éléments de friction (8, 9) sont précontraints l'un par rapport à l'autre.

2. Dispositif de freinage selon la revendication 1, **caractérisé en ce que** l'élément de friction (8, 9) est formé d'une seule pièce avec la roue motrice (65, 75).

3. Dispositif de freinage selon l'une des revendications précédentes, **caractérisé en ce que** la roue motrice (65, 75) comprend une pièce moulée ou frittée.

4. Dispositif de freinage selon l'une quelconque des revendications précédentes, **caractérisé en ce que** la roue motrice (65, 75) comprend une roue dentée (65, 75).

5. Dispositif de freinage selon l'une des revendications précédentes, **caractérisé en ce que** la roue motrice (65, 75) présente au moins par sections un revêtement de surface et/ou une structuration de surface.

6. Dispositif de freinage selon l'une des revendications précédentes, **caractérisé en ce que** les éléments de friction (8, 9) sont de forme conique.

7. Dispositif de freinage selon l'une des revendications précédentes, **caractérisé en ce que** les éléments de friction (8, 9) sont de forme tronconique.

8. Dispositif de freinage selon l'une des revendications précédentes, **caractérisé en ce que** les éléments de friction (8. 9) présentent des surfaces frontales (82, 94) espacées axialement les unes des autres.

9. Dispositif de freinage selon l'une des revendications précédentes, **caractérisé en ce que** la roue motrice (65, 75) comporte au moins un élément fonctionnel d'un entraînement de réglage (6, 7).

10. Dispositif de freinage selon l'une des revendications précédentes, **caractérisé en ce que** les surfaces de frottement sont planes.

11. Dispositif de freinage selon l'une des revendications précédentes, **caractérisé en ce qu'**au moins un élément de friction (8, 9) comporte une garniture de friction.

12. Dispositif de freinage selon l'une des revendications précédentes, **caractérisé en ce qu'**un entraînement de réglage (7) comporte un entraînement à broche.

13. Dispositif de freinage selon l'une quelconque des revendications précédentes, **caractérisé en ce qu'**un entraînement de réglage (6) comprend un agencement de cales, un agencement de rampes à billes ou un agencement de goupilles de basculement.
